# EUROPÄISCHE PATENTSCHRIFT

(11) **EP 0 926 019 B1**
(45) Veröffentlichungstag und Bekanntmachung des Hinweises auf die Patenterteilung: **22.01.2003**
(21) Anmeldenummer: 98122385.2
(22) Anmeldetag: 25.11.1998
(51) Int. Cl.: B60R 22/34

(54) **Anordnung zum Aufrollen eines Gurtbandes**
Arrangement for winding a belt
Dispositif d'enroulement d'une sangle

(30) Priorität: 22.12.1997 DE 19757373
(43) Veröffentlichungstag der Anmeldung: 30.06.1999
(73) Patentinhaber: TAKATA-PETRI (Ulm) GmbH, 89081 Ulm (DE)
(72) Erfinder: Bannert, Georg, 88444 Ummendorf (DE); Wengert, Andreas, 73557 Mutlangen (DE); Schnabl, Roland, 89077 Ulm (DE); Hasse, Hermann, 89173 Lonsee (DE); Kempfle, Thomas, 89346 Bibertal (DE); Kopetzky, Robert, 89173 Lonsee (DE)
(74) Vertreter: Baumgärtel, Gunnar, Dr.

(56) Entgegenhaltungen:
- EP-A- 0 076 058
- EP-A- 0 295 838
- WO-A-95/06576
- FR-A- 2 476 491
- US-A- 3 432 115

## Beschreibung

Die Erfindung betrifft eine Anordnung zum Aufrollen eines Gurtbandes mit einer insbesondere zylinderförmig ausgebildeten Spule, die an ihrer Mantelfläche eine parallel zur Spulenachse verlaufende axiale Aussparung aufweist, sowie einem an der Spule befestigten Gurtband.

Bei derartigen Anordnungen dient die Spule zum Aufrollen des Gurtbands entlang ihrer Mantelfläche. Hierfür wird die Spule von einer geeigneten Vorrichtung zu einer Drehbewegung um ihre Längsachse veranlaßt. Aus der Europäischen Patentschrift 0 562 423 B1 ist ein Gurtaufroller mit einer Gurtspule bekannt, deren hohlzylindrischer Mantel einen Schlitz aufweist für den Durchgang eines auf der Gurtspule aufzuwickelnden Gurtbandes. Das Ende des Gurtbandes bildet eine Schlaufe, die auf einen Torsionsstab aufgeschoben ist, der sich koaxial zu der Gurtspule durch einen hohlzylindrischen Innenraum des Spulenmantels erstreckt.

Aus der EP-A-0 295 838 ist eine Anordnung zum Aufrollen eines Gurtbandes in einem Kindersitz bekannt, die eine Spule zum Aufrollen des Gurtbandes aufweist. An der Mantelfläche der Spule sind zwei schräg zueinander und in Umfangsrichtung verlaufende Einschnitte ausgebildet, wodurch ein in Umfangsrichtung verlaufender, trapezförmiger Abschnitt gebildet ist, der in das Spuleninnere hineingedrückt ist. Im Bereich dieser trapezförmigen Eindrückung ist das Gurtband, das eine einfache vernähte Schlaufe aufweist, mit Hilfe eines Stiftes gesichert.

Ein Problem bekannter Anordnungen ist deren begrenzte mechanische Stabilität, insbesondere die Stabilität der Spulen entlang der Berandung ihrer axialen Aussparung bei ruckartiger oder dauerhafter, tangential zur Mantelfläche wirkender Zugbelastung an dem insbesondere im Spuleninneren befestigten Gurtband.

Es ist eine Aufgabe der Erfindung, die Ausgestaltung der Bestandteile der Anordnung sowie deren Zusammenwirken so zu verbessern, daß ihre Stabilität und dauerhafte Zuverlässigkeit bei einfacher Herstellung und Montage erhöht wird.

Die Aufgabe wird durch die Merkmale der unabhängigen Ansprüche gelöst.

Das Verstärkungselement ist so ausgebildet, daß es im wesentlichen eine zusätzliche mechanische Verbindung herstellt zwischen zwei einander gegenüberliegenden Seiten der axialen Aussparung der Spule, insbesondere zwischen zwei einander in der Aufroll- bzw. Drehrichtung der Spule gegenüberliegenden Seiten. Hierfür kann es im Bereich der Aussparung an der Spule befestigt werden oder Teil der Spule sein.

Durch die erfindungsgemäße Ausgestaltung der Anordnung mit dem Verstärkungselement ist es somit möglich, auf einen Randbereich der Aussparung wirkende Kräfte über das Verstärkungselement zumindest teilweise auf den jeweils gegenüberliegenden Randbereich der Aussparung zu übertragen. An der Aussparung angreifende Querkräfte können somit von einem weiten Bereich der Spule aufgenommen werden, so daß eine durch die Ausbildung der Aussparung in der Spule bewirkte Verringerung ihrer Stabilität im wesentlichen kompensiert werden kann.

Durch die Überbrückung der axialen Aussparung wird die mechanische Stabilität der Spule im Bereich der Aussparung insbesondere gegenüber tangential am Randbereich der Aussparung wirkenden Kräften erhöht. Ein Zerbrechen oder Aufreißen der Spule im Bereich der Aussparung kann dadurch wirksamer verhindert werden; die Zuverlässigkeit der Anordnung wird erhöht.

Die Handhabung der erfindungsgemäßen Anordnung bei der Montage gestaltet sich besonders einfach, wenn das Verstärkungselement als separates Bauteil ausgebildet ist. Insbesondere bei einer Ausführungsform, bei der das Verstärkungselement einen Teil der axialen Aussparung überdeckt, kann es von Vorteil sein, das separate Verstärkungselement erst in einem fortgeschrittenen Montagezustand der Anordnung an der Spule anzuordnen.

Weiterhin ist es von Vorteil, daß das Verstärkungselement bei seiner Befestigung an der Spule zumindest teilweise in dieser versenkt wird. Durch eine derartige formschlüssige Ausgestaltung des Verstärkungselements und der Spule kann nämlich eine zumindest im wesentlichen zylinderförmige Gestalt der Mantelfläche der Spule erhalten werden, wodurch das Aufrollen des Gurtbandes entlang dieser Mantelfläche erleichtert wird. Durch versenkte Anordnung des Verstärkungselements innerhalb der Spule und durch zusätzliches Anliegen des Gurtbandes an dieser Anordnung ist ein besonders wirksamer Kraftschluß zwischen dem Verstärkungselement und der Spule möglich, so daß die Stabilität der Spule noch weiter erhöht wird.

Vorteilhafte Ausführungsformen der Erfindung sind in der Beschreibung, den Figuren und den Unteransprüchen beschrieben.

Die Befestigung des Verstärkungselements an der Spule erfolgt zugunsten einer vorteilhaft einfachen Montage der Anordnung bevorzugt durch Einhaken. Hierbei ist es möglich, die für den Rotationsantrieb der Spule zum Aufrollen des Gurtbandes vorgesehene Kraft auf das Verstärkungselement zu übertragen, so daß das eingehakte Verstärkungselement dadurch fixiert bleibt. Außerdem kann das auf der Spule aufgewickelte Gurtband an dem eingehakten Verstärkungselement derart anliegen, daß es dessen Befestigung an der Spule fixiert.

Alternativ hierzu ist es möglich, das Verstärkungselement an der Spule zu verrasten oder auf andere Weise dauerhaft zu befestigen, so daß kein zusätzlich wirkender Fixierungsmechanismus vorgesehen sein muß.

Bei einer bevorzugten Ausführungsform ist das Gurtband an dem Verstärkungselement befestigt. In diesem Fall ist das Gurtband über das Verstärkungselement an der Spule befestigt. Dadurch ist es möglich, über das Gurtband eine Kraft auf das Verstärkungselement zu übertragen, die zum einen einem Einhakmechanismus entgegenwirkt, durch den das Verstärkungselement an der Spule befestigt ist. Zum anderen kann die über das befestigte Gurtband auf das Verstärkungselement übertragene Kraft auf die Spule und insbesondere den Berandungsbereich deren axialer Aussparung umgelenkt und somit zu einer Stabilisierung der Anordnung ausgenutzt werden. Somit kann das Verstärkungselement einer Zugwirkung des an ihm befestigten Gurtbandes durch seine Befestigung an der Spule unter Entfaltung einer Stabilisierungswirkung entgegenwirken.

Bei dieser Ausführungsform ist es bevorzugt, daß das Verstärkungselement von außen an der Mantelfläche der Spule befestigt ist, da sich hierdurch die Montage der Anordnung vereinfacht. Es ist allerdings auch möglich, das Verstärkungselement von einem Hohlraum innerhalb der Spule aus im Bereich der axialen Aussparung zu befestigen und das an dem Verstärkungselement befestigte Gurtband durch die axiale Aussparung aus der Spule herauszuführen.

Bei der erfindungsgemäßen Anordnung, und insbesondere bei der Befestigung des mit dem Gurtband verbundenen Verstärkungselements an der Außenseite der Spule, ist es von Vorteil, das Gurtband in Richtung eines axialen Hohlraums der Spule zu führen und dort zumindest um einen Teil der Umfangsfläche einer Welle zu führen, die innerhalb des Spulenhohlraumes koaxial zur Spulenachse angeordnet ist. Die Welle kann dabei gleichzeitig zur Übertragung einer Rotationsbewegung bzw. eines hierfür erforderlichen Drehmoments auf die Spule zum Aufrollen des Gurtbandes entlang der Mantelfläche der Spule, sowie zur Umlenkung des Gurtbandes und somit der über das Gurtband übertragenen Kraft innerhalb des Spulenhohlraumes dienen. Das zumindest teilweise entlang der Umfangsfläche der Welle geführte Gurtband kann den Spulenhohlraum durch die axiale Aussparung der Spule verlassen.

Die Befestigung des Gurtbandes an dem Verstärkungselement erfolgt bevorzugt durch eine geschlossene Schlaufe an einem Gurtbandende, die einen Teil des Verstärkungselements umschließt. Eine besonders günstige bauliche Ausgestaltung der erfindungsgemäßen Anordnung liegt vor, wenn das Verstärkungselement einen quer zur Gurtbandrichtung verlaufenden Sicherungsstift sowie ein Haltemittel zum Befestigen des Sicherungsstift an einem Aufnahmebereich der Spule aufweist, und wenn die Spule an dem Aufnahmebereich ein Aufnahmemittel besitzt, in welchem das Haltemittel zur Montage der Anordnung bzw. Sicherung des Verstärkungselements befestigt werden kann.

Vorzugsweise erstreckt sich das Haltemittel insbesondere in einer Ebene senkrecht zu der Spulenachse quer über die axiale Aussparung der Spule, so daß der Sicherungsstift und das Haltemittel an einander gegenüberliegenden Seiten der axialen Aussparung angeordnet sind. Hierdurch läßt sich eine besonders wirksame Erhöhung der Stabilität der Spule gegenüber an der axialen Aussparung wirkenden Querkräften erzielen.

Die Anordnung ist dabei dergestalt ausgebildet, daß das Haltemittel und der Sicherungsstift einander jeweils entgegengesetzt gerichteten, im wesentlichen tangential an der Mantelfläche der Spule angreifenden Kräften entgegenwirken. Insbesondere kann das Gurtband an dem Sicherungsstift befestigt sein und somit Zugkräfte auf das Verstärkungselement übertragen, denen die Befestigung des Haltemittels an dem Aufnahmemittel an der Spule entgegenwirkt.

Das Haltemittel des Verstärkungselements besitzt vorzugsweise wenigstens einen Haltearm länglicher Form, der an einem Längsende des Sicherungsstifts im wesentlichen in einem senkrechten Winkel zu diesem angeordnet sein kann. Der Haltearm übergreift die axiale Aussparung der Spule und ist dabei zumindest bereichsweise gekrümmt. Insbesondere bei derjenigen Ausführungsform der Erfindung, bei der das Verstärkungselement in der Spule versenkt befestigt ist, entspricht die Krümmung der Außenfläche des Haltearms dem Radius des zugeordneten Querschnitts der Spule.

Bevorzugt ist jeweils ein Haltearm an jedem der beiden Längsenden des Sicherungsstiftes angeformt oder befestigt. In diesem Fall können sich die beiden Haltearme an den beiden Längsenden der axialen Aussparung über diese erstrecken, so daß zur Stabilisierung der Spule im Bereich deren Aussparung eine symmetrische Kräfteverteilung erfolgen kann.

Um eine Befestigung eines Haltearms an der Spule zu ermöglichen, kann ein Einhakmittel an dessen Ende ausgebildet sein, das in einem zugeordneten Aufnahmemittel an der Spule zu befestigen ist. Vorzugsweise wird das Einhakmittel an der Spule eingehakt, und es ist als T-förmiger Anker ausgebildet. Die beiden Widerhaken dieses Ankers können im wesentlichen senkrecht zu der Längsform eines Haltearms und parallel zu der Spulenachse an dem Haltearm angeformt sein. In diesem Fall ist das zugeordnete Aufnahmemittel an der Spule als entsprechende Vertiefung ausgebildet, in der die Widerhaken mit dem Haltearm versenkt werden können.

Es ist allerdings auch möglich, das Einhakmittel an einem Haltearm als Haken auszubilden, der in eine entsprechende Vertiefung in der Spule eingeführt ist und der insbesondere in Richtung der Spulenachse weist. Alternativ oder zusätzlich kann das Einhakmittel als ein parallel zur Spulenachse verlaufender Konterstift ausgebildet sein, der an einem dem Sicherungsstift abgewandten Ende des oder der Haltearme angeordnet ist.

Bei einer vorteilhaften Ausführungsform der Anordnung weist diese einen länglich geformten Gegenhaltestift auf, der innerhalb der Mantelfläche der Spule, insbesondere innerhalb des vorstehend genannten axialen Hohlraums, angeordnet ist, und zwar parallel zur Spulenachse und der genannten axialen Aussparung der Spule bezüglich der Spulenachse im wesentlichen gegenüberstehend. Der Gegenhaltestift dient zur Aufnahme der Kraft, die für eine Umlenkung des innerhalb des axialen Hohlraums geführten Gurtbands erforderlich ist.

Das Gurtband kann also auch bei dieser Ausführungsform in Richtung eines axialen Hohlraums der Spule und dort um eine koaxial zur Spulenachse angeordnete Welle geführt sein, wobei es entlang von Teilen der Umfangsfläche der Welle verlaufen kann. Indem jedoch die eigentliche Umlenkung des Gurtbands innerhalb der Spule um den entsprechend angeordneten Gegenhaltestift erfolgt, nimmt dieser die für die Umlenkung erforderliche Gegenkraft auf, so daß die Welle im wesentlichen lediglich mit dem für die Rotationsbewegung der Spule zu übertragenden Drehmoment belastet wird, nicht jedoch mit der genannten Gegenkraft. Das Gurtband liegt in diesem Fall flächig an dem Gegenhaltestift an.

Die Mantelfläche der Spule kann eine axiale Öffnung aufweisen, die mit der axialen Aussparung der Mantelfläche über den axialen Hohlraum verbunden ist, wobei sie der axialen Aussparung bezüglich der Spulenachse insbesondere gegenübersteht. Die axiale Öffnung kann somit den axialen Hohlraum radial verlängern, um die Anordnung des Gegenhaltestifts mit darauf aufliegendem Gurtband innerhalb der Mantelfläche der Spule zu ermöglichen oder zu erleichtern. Ferner kann die axiale Öffnung die Montage der Anordnung, insbesondere den Einbau des Gegenhaltestifts, vereinfachen.

Insbesondere wenn die axiale Öffnung der axialen Aussparung im wesentlichen gegenübersteht, bewirkt sie nicht notwendigerweise eine geringere mechanische Stabilität der Anordnung, da über das Gurtband tangential auf die Mantelfläche der Spule übertragene Zugkräfte an der Berandung der axialen Aussparung angreifen und somit entlang eines weiten Teils des Mantelflächenumfangs nach außen, beispielsweise auf äußere Begrenzungsscheiben, übertragen werden können.

Der Gegenhaltestift kann entweder als separates Bauteil ausgebildet sein, oder er kann als Steg mit wenigstens einem seiner beiden Längsenden an jeweils einem anderen Teil der Spule angeformt sein, insbesondere an einer oder zwei die Mantelfläche der Spule in Richtung parallel zur Spulenachse begrenzenden Begrenzungswänden oder Begrenzungsscheiben.

Falls wenigstens ein Längsende des Gegenhaltestifts frei, d.h. nicht an einem anderen Teil der Anordnung angeformt ist, ist es von Vorteil, wenn für jedes freie Längsende eine Auflagefläche vorgesehen ist, die den Gegenhaltestift bei Kraftbelastung desselben abstützt. Eine derartige Auflagefläche kann zur zusätzlichen seitlichen Stabilisierung seitliche Begrenzungswände aufweisen, und sie kann an den genannten Begrenzungsscheiben oder an der Mantelfläche der Spule ausgebildet sein, beispielsweise als Vertiefung bzw. Stufenabsatz, entsprechend dem vorstehend erläuterten Zusammenwirken des Aufnahmemittels der Spule und des Haltemittels des Verstärkungselements.

Die Auflagefläche kann als gegenüber der Mantelfläche der Spule radial zurückversetzter Stufenabsatz ausgebildet sein. Auch kann das Gurtband entlang eines parallel zur Spulenachse verlaufenden flächigen Abschnitts des Gegenhaltestifts und/oder um diesen herum geführt ist sein, wobei dieser Abschnitt insbesondere von der Spulenachse wegweisen kann. Auch kann die die Spule an ihrer Mantelfläche eine axiale Öffnung aufweisen, die insbesondere bezüglich der Spulenachse in radialer Verlängerung des Gegenhaltestifts ausgebildet sein kann oder der axialen Aussparung bezüglich der Spulenachse im wesentlichen gegenübersteht.

Es ist möglich, die Ausdehnung der axialen Aussparung oder der axialen Öffnung der Spule parallel zur Spulenachse geringer zu dimensionieren als die Breite des entlang der Mantelfläche der Spule aufzurollenden Gurtbandes. Bei einer geringeren axialen Ausdehnung ergibt sich vorteilhaft eine noch höhere Stabilität der Spule. Hierfür ist das Gurtband derart auszubilden, daß zumindest der Gurtbandbereich, der die axiale Aussparung durchläuft bzw. die axiale Öffnung passiert, eine entsprechend verringerte Breite aufweist. Entlang des daran benachbarten, entlang der Mantelfläche der Spule aufzurollenden Gurtbandbereichs kann das Gurtband wiederum seine normale Breite aufweisen. Eine mögliche derartige Ausgestaltung des Gurtbandes wird nachfolgend beschrieben:

Die Erfindung erstreckt sich auch auf ein Gurtband, welches bereichsweise entlang einer Längsrichtung zu wenigstens einem Längsfalz umgeschlagen ist, wobei ein erster Teil dieses Bereichs des Längsfalzes an einem insbesondere senkrecht zu der Längsrichtung verlaufenden Querfalz in Richtung eines zweiten Teils dieses Bereichs zurückgeschlagen ist, und wobei der erste Teil des Längsfalzbereichs an dem zweiten Teil dergestalt befestigt ist, daß eine geschlossene Schlaufe ausgebildet ist. Die Befestigung der beiden Teile aneinander erfolgt vorzugsweise durch Vernähen, und zwar in einer Richtung senkrecht zur Gurtbandrichtung. Die somit gebildete Schlaufe kann zur Befestigung eines Endes des Gurtbands an einer Vorrichtung diese oder einen Teil derselben umschließen.

Entlang des Längsfalzbereichs besitzt das Gurtband folglich eine verringerte Breite, wodurch die Vorrichtung, an der die von dem Gurtband gebildete Schlaufe einzuhängen ist, vorteilhaft kompakter und somit stabiler ausgebildet sein kann. Bei der erfindungsgemäßen Anordnung trägt das Gurtband somit zusätzlich zur Lösung der Aufgabe der Erfindung bei.

Jenseits der entlang des Längsfalzbereichs gebildeten Schlaufe und der Befestigung der beiden Teile des Längsfalzbereichs verbreitert sich das Gurtband wieder zu normaler Breite, indem der umgeschlagene Teil des Längsfalzes, ausgehend von der Befestigungsstelle, kontinuierlich oder an einem weiteren Falz von einem umgeschlagenen Querschnitt in einen geradlinigen Querschnitt übergeht.

Durch die beschriebene Ausgestaltung des Gurtbands ist im Bereich des Längsfalzes bzw. der Schlaufe nicht nur eine verringerte Breite des Gurtbands möglich, sondern es lassen sich auch günstige Kräfteverteilungen zwischen Gurtband und Schlaufe erreichen, so daß die Gefahr des Aufbrechens oder Aufreißens der Befestigung der beiden Teile des Längsfalzbereichs verringert ist. Somit lassen sich durch die Verwendung eines derartigen Gurtbands bei der erfindungsgemäßen Anordnung die Zuverlässigkeit und Sicherheit derselben noch weiter erhöhen.

Um der gebildeten Gurtbandschlaufe zusätzliche Stabilität zu verleihen, können die beiden jeweils durch einen Längsfalz voneinander abgegrenzten Abschnitte des Gurtbands zumindest bereichsweise aneinander befestigt werden. Beispielsweise ist es möglich, die Abschnitte in Längsrichtung des Gurtbands miteinander zu vernähen.

Bei der Verwendung des Gurtbands in der erfindungsgemäßen Anordnung ist es bevorzugt, beide Längsränder des Gurtbands entlang eines gemeinsamen Längsfalzbereichs jeweils zu einem Längsfalz zur Gurtbandmitte hin umzuschlagen, so daß die beiden Längsränder einander sowie auch der Gurtbandmitte benachbart angeordnet sind. Hierdurch verringert sich die Breite des Gurtbands auf ungefähr die Hälfte des ursprünglichen Werts, wobei weiterhin eine symmetrische und weitestgehend homogene Kräfteverteilung entlang des Gurtbands zur Schlaufe hin gegeben ist.

Bei der Verwendung des Gurtbands in der erfindungsgemäßen Anordnung ist es außerdem bevorzugt, den ersten Teil des Längsfalzbereichs derart in Richtung des zweiten Teils zurückzuschlagen und an diesem zu befestigen, daß die beiden einander sowie der Gurtbandmitte benachbarten Längsränder des Gurtbandes entlang der Außenseite der gebildeten Schlaufe verlaufen. Dadurch kann bei einer Ausführungsform der erfindungsgemäßen Anordnung der das Gurtbandende bildende Teil des Längsfalzbereichs an der einer Welle innerhalb der Spule abgewandten Seite des Gurtbands zu liegen kommen, während der andere Teil des Längsfalzbereichs und das sich daran anschließende Gurtband vorteilhaft im wesentlichen flach an der Welle anliegen können.

Falls der Bereich, in dem das Gurtband von durch Längsfalz verringerter Breite auf normale Breite übergeht, sich entlang zumindest eines Teils der Mantelfläche der Spule erstreckt und der oder die umgeschlagenen Gurtband-Längsränder dabei direkt auf der Mantelfläche aufliegen, weist die Spule an ihrer Mantelfläche bevorzugt eine Vertiefung auf, deren Verlauf und Tiefe jeweils der Längsfalz des Gurtbandes entsprechen. Durch die einem umgeschlagenen Längsrand zugeordnete Vertiefung ist gewährleistet, daß das Gurtband zumindest mit seiner Außenseite flach auf der Mantelfläche der Spule zu liegen kommen kann, so daß durch Aufrollen des Gurtbands entlang der Mantelfläche entstehende übereinander angeordnete Gurtbandlagen ebenfalls flach aufeinander zu liegen kommen. Dadurch ist ein fehlerfreies Auf- und Abrollen des Gurtbands an der Spule gewährleistet.

Während die vorstehend beschriebenen Vorteile der neuartigen Ausgestaltung des Gurtbandes im Zusammenhang mit der erfindungsgemäßen Anordnung beschrieben wurden, lassen sie sich auch auf die Ausbildung einer Gurtbandschlaufe zu anderen Verwendungszwecken übertragen. Insbesondere erweisen sich der durch verringerte Gurtbandbreite erzielbare kompaktere Aufbau einer dem Gurtband zugeordneten Vorrichtung sowie die erhöhte Stabilität des erfindungsgemäßen Gurtbands auch bei der Befestigung des Gurtbands an fixen Aufhängungspunkten als vorteilhaft, insbesondere bei der Befestigung von Sicherheits- oder Haltegurten in Kraftfahrzeugen. Außerdem ist es möglich, nicht nur an einem Ende eines Gurtbandes, sondern auch in einem Mittelbereich erfindungsgemäß auf die beschriebene Weise eine Schlaufe auszubilden.

Die Erfindung wird nachstehend anhand von Ausführungsbeispielen unter Bezugnahme auf die Zeichnungen beschrieben; in diesen zeigen:
- Fig. 1a: eine schematische Perspektivansicht einer Spule und eines zugeordneten Verstärkungselements einer erfindungsgemäßen Anordnung,
- Fig. 1b: eine erste schematische Querschnittsansicht der Spule und des Verstärkungselements entlang der Ebene B gemäß Fig. 1a in Richtung A,
- Fig. 1c: eine zweite schematische Querschnittsansicht der Spule entlang der Ebene C gemäß Fig. 1a in Richtung A mit eingehaktem Verstäkungselement und befestigtem Gurtband, und
- Fig. 1d: eine der Darstellung gemäß Fig. 1c entsprechende schematische Querschnittsansicht einer anderen erfindungsgemäßen Spule mit eingehaktem Verstärkungselement, daran befestigtem Gurtband und mit Gegenhaltestift, und
- Fig. 2a - 2d: verschiedene schematische Ansichten eines erfindungsgemäßen Gurtbandes zur Verwendung mit der Spule und dem Verstärkungselement gemäß Fig. 1a.

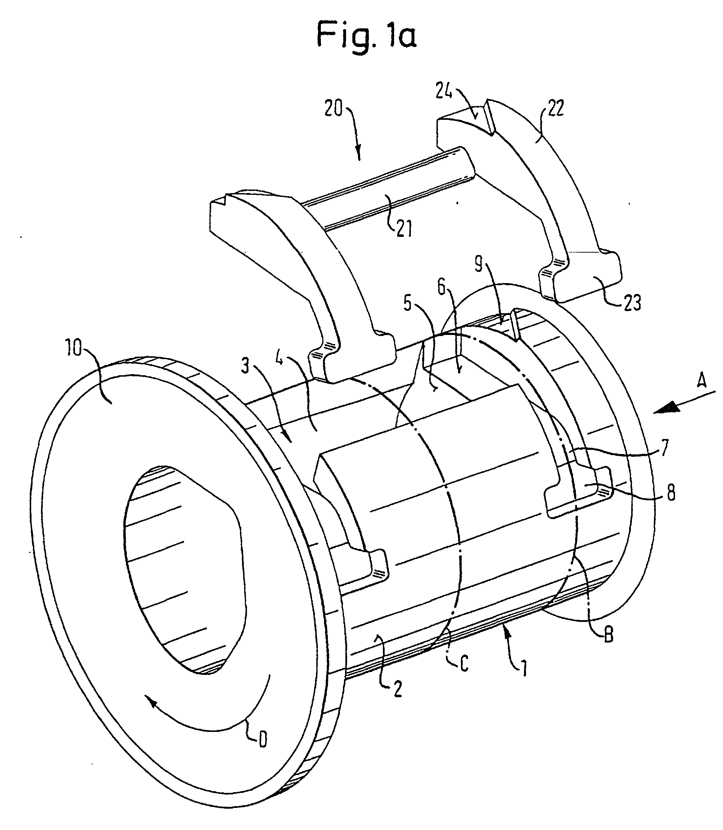

Fig. 1a zeigt in schematischer Perspektivansicht eine Spule 1. Diese besitzt die Grundform eines Zylinders mit einer Mantelfläche 2. Ein axialer Hohlraum 3 der Spule 1 ist über eine axiale Aussparung 4 an der Mantelfläche 2 nach außen geöffnet. Der Hohlraum 3 ist in axialer Richtung jeweils durch eine innere Begrenzungswand 5 begrenzt. Der Abstand der beiden Begrenzungswände 5 beträgt ungefähr die Hälfte der axialen Ausdehnung der Mantelfläche 2.

Die Aussparung 4 erstreckt sich in axialer Richtung entlang der entsprechenden Ausdehnung des Hohlraums 3 und darüber hinaus entlang der Tiefe der jeweiligen Begrenzungswand 5, so daß ein Abschnitt der Mantelfläche der inneren Begrenzungswand 5, der gegenüber der Mantelfläche 2 der Spule 1 radial zurückversetzt ist, als bereichsweise ebene Auflagefläche 6 freiliegt. Die Auflagefläche 6 erstreckt sich in einer tangentialen Richtung als eine Vertiefung 7 der Mantelfläche 2 der Spule 1, und sie mündet in einer T-förmigen Vertiefung 8.

Zwischen je einem axialen Ende der Aussparung 4 und der zugehörigen Stirnseite der Spule 1 weist die Mantelfläche 2 der Spule 1 eine bezüglich axialer und tangentialer Richtung schräg verlaufende Vertiefung 9 zur Aufnahme eines Gurtbandes auf. Die Tiefe einer schrägen Vertiefung 9 ist wesentlich geringer als diejenige der von der Auflagefläche 6 ausgehenden Vertiefungen 7, 8.

An jeder Stirnseite der Spule 1 ist eine Begrenzungsscheibe 10 größeren Durchmessers als derjenige der Mantelfläche 2 angeformt.

Über der Spule 1 ist in Fig. 1a ein Verstärkungselement 20 gezeigt. Dieses besitzt einen parallel zur Längsachse der Spule 1 verlaufenden Sicherungsstift 21, an dessen beiden Längsenden jeweils ein Haltearm 22 angeformt ist. Die Haltearme 22 erstrecken sich im wesentlichen in einer Ebene senkrecht zur Ausrichtung des Sicherungsstifts 21. An ihrem von dem Sicherungsstift 21 abgewandten Ende weisen die Haltearme 22 jeweils einen T-förmigen Anker 23 auf, dessen an dem Haltearm 22 angeformte Widerhaken sich parallel zur Ausrichtung des Sicherungsstifts 21 erstrecken.

Der Umriß eines Haltearms 22 entspricht dem Umriß der Vertiefungen 7, 8 in der Mantelfläche 2 der Spule 1. Jeder Haltearm 22 ist dergestalt gekrümmt, daß seine Unterseite auf der Auflagefläche 6 der Begrenzungswand 5 bzw. auf den Vertiefungen 7, 8 der Mantelfläche 2 formschlüssig zu liegen kommen kann und daß seine Oberseite bei Einsetzen des Haltearms 22 in die Vertiefungen 7, 8 bündig mit der Mantelfläche 2 der Spule 1 abschließt. Dabei ist an der Oberseite eines Haltearms 22 eine schräg verlaufende Vertiefung 24 vorgesehen, die der schrägen Vertiefung 9 an der Mantelfläche 2 zugeordnet ist.

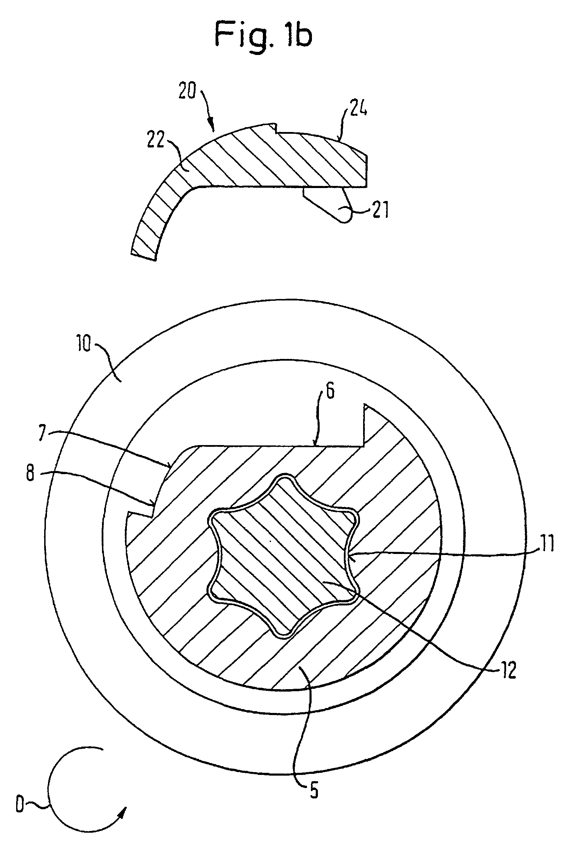

Fig. 1b zeigt schematisch eine Ansicht in der Richtung A des Querschnitts der Anordnung gemäß Fig. 1a entlang der durch die innere Begrenzungswand 5 verlaufenden Ebene B.

Im Querschnitt der Begrenzungswand 5 sind die durch die axiale Aussparung 4 gebildete und durch die Auflagefläche 6 begrenzte Vertiefung sowie die daran anschließenden Vertiefungen 7, 8 des ansonsten runden Umrisses zu erkennen. In ihrem Zentrum weist die Begrenzungswand 5 eine sternförmige, sich in axialer Richtung erstreckende Aussparung 11 auf, innerhalb der sich formschlüssig verzahnt eine ebenfalls sternförmige, koaxial zur Spulenachse angeordnete Welle 12 befindet.

In dem in Fig. 1b ebenfalls dargestellten Querschnitt des Verstärkungselements 20 ist die gekrümmte Form des Haltearms 22 zu erkennen. Weiterhin ist der daran angeformte Sicherungsstift 21 dargestellt, der einen Umriß im wesentlichen in der Form eines Dreiecks mit abgerundeten Ecken besitzt.

Zur Montage der erfindungsgemäßen Anordnung ist es vorgesehen, das Verstärkungselement 20 an der Spule 1 zu befestigen. Hierfür werden die T-förmigen Anker 23 der Haltearme 22 in den zugeordneten Vertiefungen 8 eingehakt, und der Sicherungsstift 21 wird derart in Richtung der Spule 1 gekippt, daß die Unterseite der Haltearme 22 auf der jeweils zugeordneten Auflagefläche 6 an der Begrenzungswand 5 zu liegen kommt.

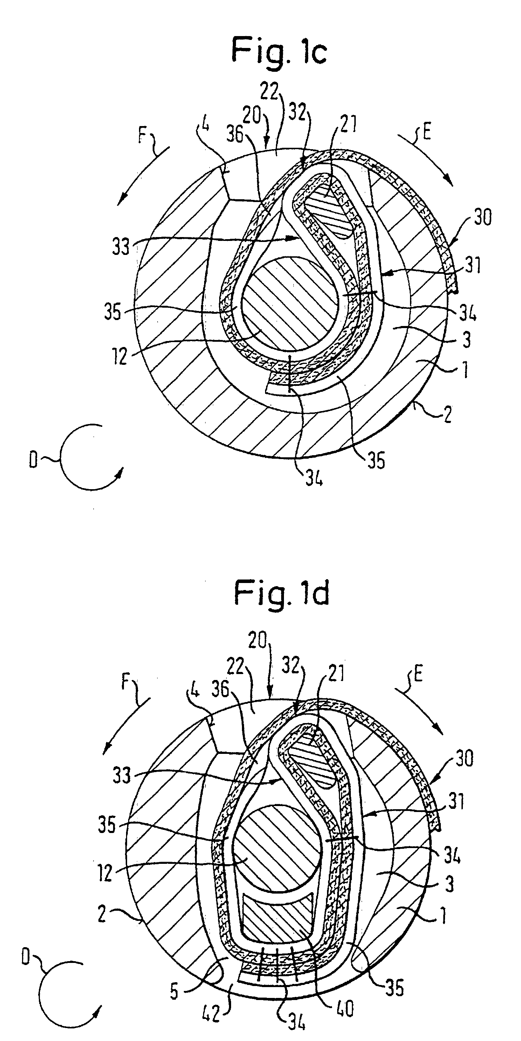

Ein schematischer Querschnitt einer montierten erfindungsgemäßen Anordnung mit der Spule 1 und dem Verstärkungselement 20 gemäß Figuren 1a und 1b ist in Fig. 1c gezeigt, wobei der Schnitt, wie in Fig. 1a durch die Linie C angedeutet, durch die Mitte der Spule 1 erfolgt und in der Richtung A betrachtet wird.

Im Mittenquerschnitt der Spule 1 ist deren axialer Hohlraum 3 und die sich daran anschließende axiale Aussparung 4 zu erkennen. Im Bereich des axialen Hohlraums 3 besitzt die Welle 12 einen runden Querschnitt. Das Verstärkungselement 20 ist derart ausgebildet bzw. in die zugeordneten Vertiefungen 7, 8 der Spule 1 eingesetzt, daß die Oberseite seiner Haltearme 22 den runden Querschnitt der Mantelfläche 2 der Spule 1 entlang der Aussparung 4 im wesentlichen fortsetzt.

Ein das Gurtbandende bildender erster Teil 31 des Gurtbandes 30 ist an einem Querfalz 32 derart um den Sicherungsstift 21 zurückgeschlagen und an einem zweiten Teil 33 durch Quervernähungen 34 befestigt, daß der Sicherungsstift 21 entlang seiner durch die beiden Haltearme 22 begrenzten Länge von einer geschlossenen Schlaufe des Gurtbandes 30 umschlossen ist. Dabei sind die Längsränder 35 des Gurtbands 30 entlang der beiden Teile 31, 33 zur Gurtbandmitte hin umgeschlagen und mit dem Gurtband 30 vernäht, so daß jeder Teil 31, 33 jeweils zwei Gurtbandlagen aufweist, von denen im Querschnitt durch die Gurtbandmitte gemäß Fig. 1c jeweils eine Lage als umgeschlagener Längsrand 35 und eine Lage im Schnitt zu erkennen ist.

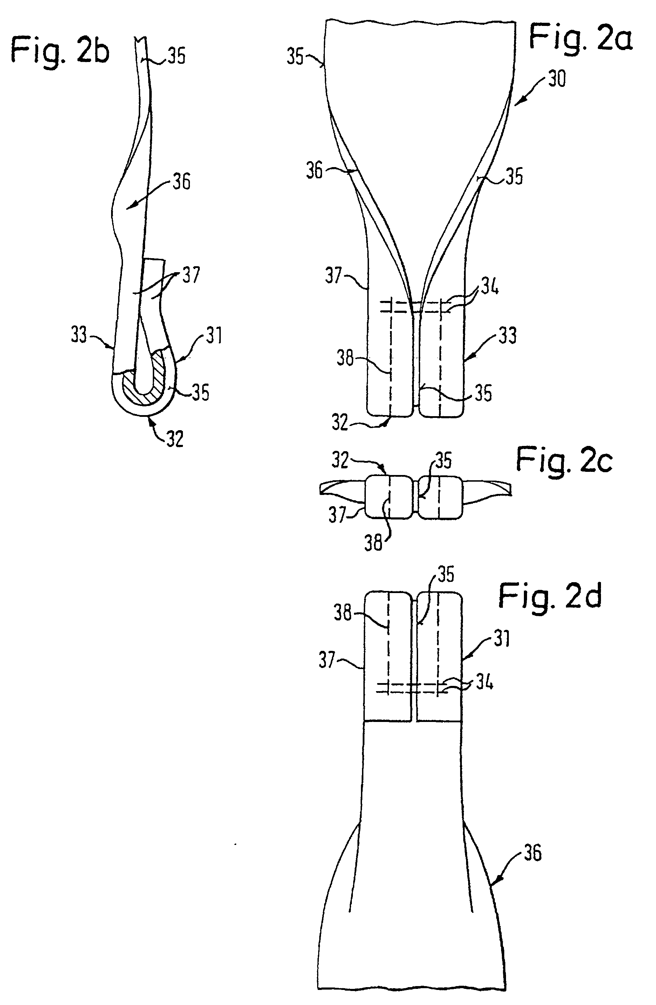

In einem sich an die Vernähung 34 des Gurtbandendes anschließenden Übergangsbereich 36 geht der umgeschlagene Gurtband-Längsrand 35 in den nicht umgeschlagenen Zustand geradlinigen Querschnitts über, so daß das Gurtband 30 entlang dieses Bereichs 36 allmählich seine volle Breite einnimmt (vgl. auch Fig. 2a). Der Längsrand-Übergangsbereich 36 erstreckt sich dabei über die axiale Aussparung 4 hinaus bis zur Spulenmantelfläche 2. Dort nehmen die in Fig. 1a gezeigten schrägen Vertiefungen 9, 24 an der Mantelfläche 2 bzw. an den Haltearmen 22 die ihnen zugewandten Längsränder 25 formschlüssig auf.

Der genaue Aufbau und die Faltung des Gurtbands 30 werden im Zusammenhang mit den Figuren 2a bis 2d noch näher erläutert.

Das mit seiner Schlaufe den Sicherungsstift 21 umschließende Gurtband 30 ist in der Darstellung gemäß Fig. 1c im Uhrzeigersinn entlang eines weiten Bereichs der Mantelfläche der Welle 12 geführt und verläßt den Hohlraum 3 durch die axiale Aussparung 4 derart, daß es zunächst an der Querfalz 32 der Schlaufe und nachfolgend an der dem Sicherungsstift benachbarten Seite der Mantelfläche 2 der Spule 1 anliegt. Im nicht dargestellten weiteren Verlauf des Gurtbands 30 kann dieses noch mehrmals um die Mantelfläche 2 gewickelt sein, so daß es in mehreren Lagen auf sich selbst aufliegt.

Die in den Figuren 1a, 1b und 1c gezeigte Spule 1 und das Verstärkungselement 20 sind für das Aufrollen des Gurtbands 30 entlang der Mantelfläche 2 der Spule vorgesehen. Hierfür kann ein in den Figuren nicht dargestellter Aufrollmechanismus den Antrieb der Spule 1 zu einer Drehbewegung um eine Richtung D bewirken, und ein ebenfalls nicht dargestellter Haltemechanismus kann eine insbesondere ruckartige Drehbewegung der Spule 1 entgegen der Richtung D blockieren.

Das an der Spule 1 befestigte Verstärkungselement 20 dient zum einen zur Fixierung des Gurtbandes 30 bzw. dessen Schlaufe über den Sicherungsstift 21 an der Spule 1, so daß das Gurtband 30 durch eine über die Welle 12 auf die Spule 1 übertragene Drehbewegung entlang der Mantelfläche 2 aufgerollt werden kann.

Zum anderen bewirkt das Verstärkungselement 20 eine mechanische Stabilisierung der Spule 1 insbesondere im Bereich ihrer axialen Aussparung 4: Über das Gurtband 30 auf die axiale Berandung der Aussparung 4 tangential wirkende Kraftkomponenten werden durch denjenigen Abschnitt des Verstärkungselements 20, der auf der bezüglich der betroffenen Berandung gegenüberliegenden Seite der axialen Aussparung 4 liegt, mit übernommen, so daß ein Aufbrechen oder ein Aufreißen der Spule 1 an der Aussparung 4 wirksam verhindert werden kann.

Falls das Gurtband 30, wie in Fig. 1c dargestellt, mit gleichbleibend gerichteter Krümmung um die Welle 12 und nachfolgend um die Mantelfläche 2 gewickelt ist und in diesem Wickelsinn über den Querfalz 32 eine Zugkraft auf den Sicherungsstift 21 in die Richtung E überträgt, wird diese Kraft von dem Sicherungsstift 21 über die Haltearme 22 und deren Anker 23 auch auf den gegenüberliegenden Bereich der Spulenmantelfläche 2 übertragen, so daß die Kraftbelastung die Aussparung 4 überbrückt.

Falls umgekehrt das Gurtband 30 außerhalb des Spulenhohlraums 3 bzw. der Aussparung 4 in die Richtung F gewickelt und in dieser Richtung zugbelastet ist, können an der zugeordneten Berandung der Aussparung 4 wirkende Tangentialkräfte über die Anker 23 und die Haltearme 22 auf den Sicherungsstift 21 übertragen werden, an dem das über die Welle 12 umgelenkte Gurtband 30 in im wesentlichen entgegengesetzter Richtung angreift.

Somit dient das Verstärkungselement 20 nicht nur zur Befestigung des Gurtbands 30 an der Spule 1, sondern es ermöglicht für beide möglichen Kraftrichtungen E, F einen Übertrag insbesondere der tangentialen Komponente einer an einer Seite der Aussparung 4 an der Mantelfläche 2 wirkenden Kraft auf die jeweils gegenüberliegende Seite der Aussparung 4.

In Fig. 1d ist eine Weiterbildung der Spule gemäß der Figuren 1a bis 1c gezeigt, und zwar in einer der Darstellung gemäß Fig. 1c entsprechenden Querschnittsansicht. Bei der in Fig. 1d dargestellten Ausführungsform bezeichnen dieselben Bezugszeichen wie in den Fig. 1a bis 1c jeweils gleiche oder gleichartige Teile.

Im Unterschied zu der vorstehend beschriebenen Spule ist bei dieser Ausführungsform ein Gegenhaltestift 40 vorgesehen, der sich parallel zu der Achse der Welle 12 erstreckt, und zwar unmittelbar benachbart und entlang der der axialen Aussparung 4 gegenüberstehenden Seite der Welle 12. Die axiale Aussparung 4, die Welle 12 und der Gegenhaltestift 40 sind in der Querschnittsansicht gemäß Fig. 1d also nacheinander im wesentlichen entlang einer Geraden angeordnet. Das Gurtband 30 ist von dem Sicherungsstift 21 aus innerhalb der in der Darstellung gemäß Fig. 1d rechten Hälfte des axialen Hohlraums 3, um den nach außen weisenden Abschnitt des Gegenhaltestifts 40 herum und entlang der linken Hälfte des axialen Hohlraums 3 aus der axialen Aussparung 4 heraus geführt.

An der der Welle 12 gegenüberstehenden Seite des Gegenhaltestifts 40 weist die Mantelfläche 2 der Spule 1 eine axiale Öffnung 42 auf. Der an dem Gegenhaltestift 40 anliegende Abschnitt des Gurtbands 30 befindet sich in bezüglich der Welle 12 radialer Richtung noch innerhalb des Umrisses der inneren Begrenzungswand 5.

Der Gegenhaltestift 40 ist als eigenes Bauteil ausgebildet und ist an seinen beiden Längsenden auf in Fig. 1d nicht dargestellte Weise in an den inneren Begrenzungswänden 5 ausgebildeten Auflageflächen derart verankert, verrastet oder verklemmt, daß er bei einer über das Gurtband 30 auf ihn übertragenen und im wesentlichen in Richtung der Welle 12 wirkenden Zugkraft eine stabile Lage einnimmt.

Die in Fig. 1d gezeigte Anordnung dient zum Aufrollen des Gurtbands 30 entlang der Mantelfläche 2 der Spule 1 auf die im Zusammenhang mit den Figuren 1a bis 1c beschriebene Weise. Dementsprechend treffen die in jenem Zusammenhang beschriebenen Funktionen und Vorteile der Anordnung, insbesondere des Verstärkungselements 20, auch auf die in Fig. 1d dargestellte Ausführungsform zu.

Da das Gurtband 30 vom Sicherungsstift 21 aus in Richtung des Gegenhaltestifts 40, um diesen herum und aus der axialen Aussparung 4 heraus geführt ist, bewirkt der der axialen Aussparung 4 und dem Sicherungsstift 21 bezüglich der Welle 12 gegenüberstehende Gegenhaltestift 40 außerdem, daß die Welle 12 von Zugkräften oder Biegemomenten durch das Gurtband 30 entlastet wird, so daß an der Welle 12 im wesentlichen lediglich die für das Aufrollen des Gurtbands 30 oder das Blockieren der Spule 1 erforderlichen Drehmomente wirken.

Um den axialen Hohlraum 3 zur Aufnahme des Gegenhaltestifts 40 ausreichend zu vergrößern, ist es auch möglich, anstelle der Ausbildung der Mantelfläche 2 mit der axialen Öffnung 42 die Wandstärke der Mantelfläche 2 an der entsprechenden Stelle lediglich dünner auszugestalten.

Ferner ist es möglich, den Gegenhaltestift 40 zumindest entlang des Abschnitts, an dem das Gurtband 30 anliegt, mit zwei jeweils in Richtung der axialen Aussparung 4 weisenden, flächigen Flügeln auszubilden, welche die Welle 12 berührungslos zumindest teilweise umgeben, so daß ein Anliegen des Gurtbands 30 an der Welle 12 und somit eine Behinderung einer Rotationsbewegung der Welle 12 oder ein Aufscheuern des Gurtbands 30 verhindert wird.

Zur näheren Erläuterung der Faltung und Vernähung des in den Figuren 1c und 1d dargestellten Gurtbands 30 ist in den Figuren 2a, 2b, 2c und 2d das Gurtband 30 im nicht-montierten, ausgestreckten Zustand gezeigt. Die beiden Längsränder 35 des Gurtbands 30 sind an dessen Endbereich jeweils entlang eines Längsfalzes 37 zur Gurtbandmitte hin umgeschlagen und durch eine Längsnaht 38 mit dem verbleibenden, nicht umgeschlagenen Abschnitt der jeweiligen Gurtbandhälfte vernäht. Entlang dieses Längsfalzbereichs nimmt das Gurtband 30 somit nur noch ungefähr die Hälfte der ursprünglichen Breite ein, und die äußere Berandung des längsgefalteten Gurtbandes 30 wird durch den jeweiligen Längsfalz 37 gebildet.

Ein das Gurtbandende bildender erster Teil 31 des Gurtbands 30 ist an einem Querfalz 32 in Richtung eines benachbarten zweiten Teils 33 zurückgeschlagen und durch eine Quernaht 34 mit diesen vernäht. Die Quernaht 34 endet an beiden Teilen dabei im wesentlichen an dem jeweiligen Ende der Längsnaht 38. Die beiden Gurtbandteile 31, 33 sowie deren Quervernähung 34 bilden somit eine geschlossene Schlaufe. Hierbei ist der erste Teil 31 auf den zweiten Teil 32 derart umgeschlagen, daß die zur Gurtbandmitte hin umgeschlagenen Gurtband-Längsränder 35 auf der Außenseite der Schlaufe zu liegen kommen bzw. der Gurtbandmittenbereich die Innenseite der Schlaufe bildet.

An die Quernaht 34 und somit an das Ende der Längsvernähung 38 schließt sich, wie in der Draufsicht gemäß Fig. 2a besonders deutlich zu erkennen ist, ein Übergangsbereich 36 an, in dem die zur Gurtbandmitte hin umgeschlagenen Längsränder 35 in ihre gerade gerichtete Position zurückkehren, so daß das Gurtband 30 am Ende dieses Bereichs 36 einen flachen Querschnitt aufweist. Dabei ergibt sich im entspannten Zustand des Gurtbandes 30 eine leichte Erhöhung des Verlaufs des Längsrands 35, wie in der teilweise aufgeschnittenen Seitenansicht gemäß Fig. 2b besonders deutlich zu erkennen ist.

Durch die in den Figuren 2a bis 2d gezeigte erfindungsgemäße Ausgestaltung des Gurtbands 30 weist die an dem Gurtbandende ausgebildete Schlaufe eine Breite auf, die wesentlich geringer ist als die Breite des übrigen Gurtbands. Dadurch ist bei der erfindungsgemäßen Anordnung, wie in den Figuren 1a bis 1c sowie in Fig. 1d gezeigt ist, sowie auch bei anderen Anwendungen einer Gurtbandaufhängung ein kompakterer Aufbau der von der Gurtbandschlaufe umschlossenen Vorrichtung und insbesondere eine verringerte Länge des Sicherungsstifts 21 möglich.

## Patentansprüche

1. Anordnung zum Aufrollen eines Gurtbandes (30) mit
- einer Spule (1), die an ihrer Mantelfläche (2) eine parallel zur Spulenachse verlaufende axiale Aussparung (4) aufweist,
- einem an der Spule (1) befestigten Gurtband (30), und
- einem als separates Bauteil ausgebildeten Verstärkungselement (20), das an der Spule (1) angeordnet ist, die axiale Aussparung (4) überbrückt und in der Spule (1) zumindest teilweise versenkbar ist.

2. Anordnung nach Anspruch 1,
**dadurch gekennzeichnet,**
**daß** das Gurtband (30) durch die axiale Aussparung (4) hindurch aus der Spule (1) heraus geführt ist.

3. Anordnung nach zumindest einem der vorstehenden Ansprüche,
**dadurch gekennzeichnet,**
**daß** das Gurtband (30) um zumindest einen Teil der Umfangsfläche einer Welle (12) herum und/oder entlang eines Teils der Umfangsfläche einer Welle (12) geführt ist, wobei die Welle (12) koaxial zur Spulenachse innerhalb eines axialen Hohlraums (3) der Spule (1) angeordnet ist.

4. Anordnung nach zumindest einem der vorstehenden Ansprüche,
**dadurch gekennzeichnet,**
**daß** das Verstärkungselement (20) einen quer zur Gurtbandrichtung verlaufenden Sicherungsstift (21) sowie ein Haltemittel (22, 23) zum Befestigen des Sicherungsstifts (21) an der Spule (1) aufweist und daß die Spule (1) ein Aufnahmemittel (7, 8) besitzt, in dem das Haltemittel (22, 23) befestigbar ist.

5. Anordnung nach Anspruch 4,
**dadurch gekennzeichnet,**
**daß** der Sicherungsstift (21) und das Haltemittel (22, 23) zur Anordnung an einander im wesentlichen gegenüberliegenden Seiten der axialen Aussparung (4) der Spule (1) vorgesehen sind.

6. Anordnung nach Anspruch 4 oder 5,
**dadurch gekennzeichnet,**
**daß** das Haltemittel zwei im wesentlichen länglich geformte Haltearme (22) aufweist, die jeweils an einem Längsende des Sicherungsstifts (21) angeordnet sind.

7. Anordnung nach Anspruch 6,
**dadurch gekennzeichnet,**
**daß** ein Ende eines Haltearms (22) als Einhakmittel (23) ausgebildet ist, das in der Spule (1) befestigbar ist.

8. Anordnung nach zumindest einem der vorstehenden Ansprüche,
**dadurch gekennzeichnet,**
**daß** sie einen länglichen Gegenhaltestift (40) aufweist, der im wesentlichen innerhalb der Mantelfläche (2) der Spule (1) parallel zur Spulenachse angeordnet ist, wobei der Gegenhaltestift (40) der axialen Aussparung (4) der Mantelfläche (2) bezüglich der Spulenachse im wesentlichen gegenübersteht.

9. Anordnung nach Anspruch 8,
**dadurch gekennzeichnet,**
**daß** die Spule (1) an ihrer Mantelfläche (2) und/oder an wenigstens einer äußeren Begrenzungsscheibe (10) eine Auflagefläche aufweist, auf welcher der Gegenhaltestift (40) mit jeweils einem Längsende aufstützbar ist.

10. Anordnung nach zumindest einem der vorstehenden Ansprüche,
**dadurch gekennzeichnet,**
**daß** die Ausdehnung der axialen Aussparung (4) und/oder der axialen Öffnung (42) der Spule (1) in einer Richtung parallel zur Spulenachse geringer ist als die Breite des ungefalteten Gurtbandes (30).

11. Gurtband (30), insbesondere zur Verwendung in einer Anordnung nach zumindest einem der vorstehenden Ansprüche,
**dadurch gekennzeichnet,**
**daß** es bereichsweise entlang seiner Längsrichtung zu wenigstens einem Längsfalz (37) umgeschlagen ist,
**daß** ein erster Teil (31) des Bereichs dieses Längsfalzes (37) an einem Querfalz (32) in Richtung eines zweiten Teils (33) des Längsfalzbereichs zurückgeschlagen ist, und
**daß** der erste Teil (31) des Längsfalzbereichs an dem zweiten Teil (33) dergestalt befestigt, vorzugsweise vernäht ist, daß am Gurtbandende eine Schlaufe ausgebildet ist.

12. Gurtband (30) nach Anspruch 11,
**dadurch gekennzeichnet,**
**daß** in dem Längsfalzbereich die beiden Längsränder (35) des Gurtbands (30) zur Gurtbandmitte hin zu je einem Längsfalz (37) dergestalt umgeschlagen sind, daß die beiden Längsränder (35) einander sowie der Gurtbandmitte benachbart angeordnet sind, wobei der erste Teil (31) des Längsfalzbereichs dergestalt in Richtung des zweiten Teils (33) zurückgeschlagen und an diesem befestigt ist, daß die beiden einander sowie der Gurtbandmitte benachbarten Längsränder (35) des Gurtbands (30) entlang der Außenseite der gebildeten Schlaufe verlaufen.

13. Gurtband (30) nach Anspruch 11 oder 12,
**dadurch gekennzeichnet,**
**daß** zwei durch einen Längsfalz (37) abgegrenzte Abschnitte des Gurtbands (30) zumindest bereichsweise im wesentlichen in Längsrichtung des Gurtbands (30) miteinander vernäht sind.

## Claims

1. Arrangement for rolling up a belt band (30), with
- a reel (1) which has on its outer surface (2) an axial clearance (4) running parallel to the reel axis,
- a belt band (30) fastened to the reel (1), and
- a reinforcing element (20) which is produced as a separate component and which is arranged on the reel (1), bridges the axial clearance (4) and is capable of being at least partially countersunk in the reel (1).

2. Arrangement according to Claim 1, **characterized in that** the belt band (30) is led through the axial clearance (4) out of the reel (1).

3. Arrangement according to at least one of the preceding claims, **characterized in that** the belt band (30) is led around at least part of the circumferential surface of a shaft (12) and/or along part of the circumferential surface of a shaft (12), the shaft (12) being arranged coaxially to the reel axis within an axial cavity (3) of the reel (1).

4. Arrangement according to at least one of the preceding claims, **characterized in that** the reinforcing element (20) has a securing pin (21) running transversely to the belt-band direction and also a holding means (22, 23) for fastening the securing pin (21) to the reel (1), and **in that** the reel (1) possesses a reception means (7, 8), in which the holding means (22, 23) can be fastened.

5. Arrangement according to Claim 4, **characterized in that** the securing pin (21) and the holding means (22, 23) are provided for arrangement on sides of the axial clearance (4) of the reel (1) which are located essentially opposite one another.

6. Arrangement according to Claim 4 or 5, **characterized in that** the holding means has two holding arms (22) of essentially elongate shape which are arranged in each case at one longitudinal end of the securing pin (21).

7. Arrangement according to Claim 6, **characterized in that** one end of the holding arm (22) is produced as a hooking-in means (23) which can be fastened in the reel (1).

8. Arrangement according to at least one of the preceding claims, **characterized in that** it has an elongate counterholding pin (40) which is arranged parallel to the reel axis essentially within the outer surface (2) of the reel (1), the counterholding pin (40) being located essentially opposite the axial clearance (4) of the outer surface (2) with respect to the reel axis.

9. Arrangement according to Claim 8, **characterized in that** the reel (1) has, on its outer surface (2) and/or on at least one outer limiting disc (10), a bearing surface on which the counterholding pin (40) is capable of being supported in each case at one longitudinal end.

10. Arrangement according to at least one of the preceding claims, **characterized in that** the extent of the axial clearance (4) and/or of the axial orifice (42) of the reel (1) in a direction parallel to the reel axis is smaller than the width of the non-folded belt band (30).

11. Belt band (30), in particular for use in an arrangement according to at least one of the preceding claims, **characterized in that** it is turned in, in regions, along its longitudinal direction, to form at least one longitudinal fold (37), **in that** a first part (31) of the region of this longitudinal fold (37) is turned back at a transverse fold (32) in the direction of a second part (33) of the longitudinal-fold region, and **in that** the first part (31) of the longitudinal-fold region is fastened, preferably stitched, to the second part (33) in such a way that a loop is formed at the belt-band end.

12. Belt band (30) according to Claim 11, **characterized in that**, in the longitudinal-fold region, the two longitudinal edges (35) of the belt band (30) are turned in towards the belt-band centre, in each case to form a longitudinal fold (37), in such a way that the two longitudinal edges (35) are arranged adjacently to one another and to the belt-band centre, the first part (31) of the longitudinal-fold region being turned back in the direction of the second part (33) and fastened to the latter in such a way that the two longitudinal edges (35) of the belt band (30) which are adjacent to one another and to the belt-band centre run along the outside of the loop formed.

13. Belt band (30) according to Claim 11 or 12, **characterized in that** two portions of the belt band (30) which are delimited by a longitudinal fold (37) are stitched to one another, at least in regions, essentially in the longitudinal direction of the belt band (30).

## Revendications

1. Dispositif d'enroulement d'une sangle (30) comportant
- une bobine (1) qui présente sur sa surface d'enveloppe (2) un évidement (4) axial s'étendant parallèlement à l'axe de la bobine,
- une sangle (30) fixée sur la bobine (1), et
- un élément de renfort (20) conçu en tant que pièce séparée, qui est disposé sur la bobine (1), recouvre l'évidement axial (4) et peut s'escamoter au moins partiellement dans la bobine (1).

2. Dispositif selon la revendication 1,
**caractérisé en ce que**,
la sangle (30) est guidée à travers l'évidement axial (4) hors de la bobine (1).

3. Dispositif selon au moins l'une des revendications précédentes,
**caractérisé en ce que**,
la sangle (30) est guidée autour d'au moins une partie de la surface d'enveloppe d'un arbre (12), l'arbre (12) étant disposé de façon coaxiale par rapport à l'axe de bobine à l'intérieur d'un espace creux axial (3) de la bobine (1).

4. Dispositif selon au moins l'une des revendications précédentes,
**caractérisé en ce que**,
l'élément de renfort (20) présente une broche de sûreté (21) s'étendant transversalement à la direction de la sangle ainsi qu'un moyen de retenue (22,23) pour fixer la broche de sûreté (21) sur la bobine (1) et **en ce que** la bobine (1) possède un moyen de réception (7,8) dans lequel peut être fixé le moyen de retenue (22,23).

5. Dispositif selon la revendication 4,
**caractérisé en ce que**,
la broche de sûreté (21) et le moyen de retenue (22,23) pour l'agencement l'un sur l'autre sont prévus sensiblement sur les côtés opposés de l'évidement (4) de la bobine (1).

6. Dispositif selon la revendication 4 ou 5,
**caractérisé en ce que**,
le moyen de retenue présente deux bras de retenue (22) de forme sensiblement oblongue qui sont respectivement disposés sur une extrémité longitudinale de la broche de sûreté (21).

7. Dispositif selon la revendication 6,
**caractérisé en ce que**,
une extrémité d'un bras de retenue (22) peut être conçue comme moyen d'accrochage (23) qui peut être fixé dans la bobine (1).

8. Dispositif selon au moins l'une des revendications précédentes,
**caractérisé en ce que**,
il présente une broche de contre appui oblongue (40), qui est disposée sensiblement à l'intérieur de la surface d'enveloppe (2) de la bobine (1) parallèlement à l'axe de bobine, moyennant quoi la broche de contre appui (40) de l'évidement axial (4) de la surface d'enveloppe (2) est sensiblement opposé par rapport à l'axe de bobine.

9. Dispositif selon la revendication 8,
**caractérisé en ce que**,
la bobine (1) présente sur sa surface d'enveloppe (2) et/ou sur au moins une rondelle de délimitation extérieure (10) une surface d'appui, sur laquelle peut s'appuyer la broche de contre appui (40) avec respectivement une extrémité longitudinale.

10. Dispositif selon au moins l'une des revendications précédentes,
**caractérisé en ce que**,
l'élargissement de l'évidement axial (4) et/ou de l'ouverture axiale (42) de la bobine (1) dans une direction parallèle à l'axe de bobine est inférieure à la largeur de la sangle non dépliée (30).

11. Sangle (30), en particulier dans un dispositif selon au moins l'une des revendications précédentes,
**caractérisée en ce que**,
elle est rabattue en certaines zones le long de sa direction longitudinale sur au moins une pliure longitudinale (37),
**en ce qu'**une première partie (31) de la zone de cette pliure longitudinale (37) est ramenée sur une pliure transversale (32) en direction d'une seconde partie (33) de la zone de pliure longitudinale, et
**en ce que** la première partie (31) de la zone de pliure longitudinale est fixée de telle sorte sur la deuxième partie (33), de préférence cousue sur celle-ci, qu'une boucle est formée sur l'extrémité de sangle.

12. Sangle (30) selon la revendication 11,
**caractérisée en ce que**,
dans la zone de pliure longitudinale les deux bords longitudinaux (35) de la sangle (30) par rapport au centre de sangle sont respectivement rabattus sur une pliure longitudinale (37) de telle sorte que les deux bords longitudinaux (35) sont disposés de façon contiguë entre eux et ainsi que du centre de la sangle,
la première partie (31) de la zone de pliure longitudinale étant ramenée de telle sorte en direction de la seconde partie (33) et fixée sur celle-ci que les deux bords longitudinaux (35) de la sangle (30) contigus entre eux ainsi que du centre de sangle, s'étendent le long du côté extérieur de la boucle formée.

13. Sangle (30) selon la revendication 11 ou 12,
**caractérisée en ce que**,
deux sections de la sangle (30) délimitées par une pliure longitudinale (37) sont cousues entre elles au moins en certaines zones sensiblement dans la direction longitudinale de la sangle (30).
